# FASCICULE DE BREVET EUROPEEN

(11) **EP 1 017 234 B1**
(45) Date de publication et mention de la délivrance du brevet: **25.05.2016**
(21) Numéro de dépôt: 99204398.4
(22) Date de dépôt: 20.12.1999
(51) Int. Cl.: H04N 7/16

(54) **Circuit de télévision destiné à recevoir ou envoyer des signaux depuis ou vers différentes directions**
Fernsehschaltung für Signalempfang- oder Übertragung aus oder nach verschiedenen Richtungen
Television circuit for receiving or transmitting signals from or to different directions

(30) Priorité: 29.12.1998 FR 9816566
(43) Date de publication de la demande: 05.07.2000
(73) Titulaire: Pace Plc, Saltaire Shipley West Yorkshire BD18 3LF (GB)
(72) Inventeur: Rakhodai, Issa, 75008 Paris (FR)
(74) Mandataire: Wood, Graham

(56) Documents cités:
- WO-A-96/07267
- US-A- 5 805 088
- "FUNCTIONAL MODEL OF A CONDITIONAL ACCESS SYSTEM" EBU REVIEW- TECHNICAL, no. 266, 21 décembre 1995 (1995-12-21), pages 64-77, XP000559450 Grand- Saconnex, CH ISSN: 0251-0936
- WECHSELBERGER T: "CONDITIONAL ACCESS AND ENCRYPTION OPTIONS FOR DIGITAL COMPRESSION SYSTEMS" PROCEEDINGS FROM ELEVEN TECHNICAL SESSIONS OF THE ANNUAL CONVENTION AND EXPOSITION OF THE NATIONAL CABLE TELEVISION ASSOCIATION, SAN FRANCISCO, JUNE 6 - 9, 1993, no. CONVENTION 42, 6 juin 1993 (1993-06-06), pages 144-151, XP000410494 RUTKOWSKI K

## Description

La présente invention concerne un circuit intégé pour la réalisation d' un appareil de télévision ou de péritélévision.

Elle concerne aussi un appareil récepteur décodeur de télévision muno d' un circuit intégér comprenant entre autres des moyens de désembrouillage, d' accés conditionnel et de démultiplexage, et au microprocesseur.

Elle concerne enfin une interface de liaison entre un appareil de péritélévision et un appareil récepteiur décodeur de télévision.

La publication internationale WO9607267 divulgue un systéme de traitement de signal vidéo comprenamt plusieurs composantes, représent ant chascue plusieurs programmes vidéo, par exemple plusieurs programmes TV à péage. Chaque composante du traitement de signal, comme par exemple le desembrouillage de signal TV à péage, est traitée par une cartes à circuit intégér à haut débit connectées en série, ou par carte à puce intelligente connectée en série. Un signal de sortie de la derniére carte à puce comprend plusieurs composantes de signaux. La pluralité de composantes des signaux est traitée pour obtenior une image comprenant de multiples images composantes, comme les < < picture-in-picture (PIP) » ou les << picture-outside picture (POP)>> dans le systéme de télévision. Chaque portion d'image est reproduite en réponse à une composante de signaux traités.

La publication portent le titre « Functional model of a conditional access system >> (article de presse dans EBU Review Technical n° 266 du 21 décembre 1995, pages 64-77) décrit un systéme d' accés conditionnel utilisé pour s'assurer que les services de diffusion générale sont accessibles seulement aux abonnés ayant le droit recevoir ces services.

Actuellement, la plupart des connexions pour le transport d'un flux dit "MPEG2 Transport Stream" à I' interieur d'un appareil de télévision ou de péritelévision sont de type paralléle et, pour être capable d'envoyer ou recevoir différents flux de données verso u depuis différents organs récepteurs ou émetteurs, il faut prévoir des moyens de commutation relativement complexes et mettant en oeuvre un grand nombre de conducteurs.

Dispositif de décodage et de réception de télévision doté d'un circuit monolithique comprenant, entre autres, des moyens de décryptage, des moyens à accès conditionnel, des moyens de démultiplexage, et un microprocesseur, caractérisé en ce que ledit circuit monolithique est destiné à fonctionner avec un dispositif de télévision ou un moniteur de télévision périphérique, ledit circuit monolithique comprenant une matrice de commutation pilotée par le microprocesseur et conçue pour transmettre différents flux de données de type MPEG vers différents éléments de réception ou de transmission, ou pour en recevoir à partir de ces derniers, ladite matrice comportant des connexions de type parallèle, cas dans lequel une connexion multiple de type série est constituée sur la base d'une connexion de type parallèle, le circuit étant doté de moyens destinés à piloter l'application des groupes de signaux de type série sur les mêmes conducteurs conçus pour les signaux de type parallèle.

Interface de connexion entre un dispositif de moniteur de télévision périphérique et un dispositif de décodage et de réception de télévision, ladite interface de connexion comportant un circuit monolithique à fonctionner avec un dispositif de télévision ou un moniteur de télévision périphérique, ledit circuit monolithique comprenant une matrice de commutation pilotée par un microprocesseur et conçue pour transmettre différents flux de données de type MPEG vers différents éléments de réception ou de transmission, ou pour en recevoir à partir de ces derniers, ladite matrice comportant des connexions de type parallèle, cas dans lequel une connexion multiple de type série est constituée sur la base d'une connexion de type parallèle, le circuit étant doté de moyens destinés à piloter l'application des groupes de signaux de type série sur les mêmes conducteurs conçus pour les signaux de type parallèle.

Dans l'avenir il y aura de plus de connexions de type série.

Néanmoins, pour assurer la compatibilité avec les circuits actuels, il reste nécessaire de disposer de connexions de type paralléle. L'invention se propose d'offrir, sans utiliser trop de conducteurs, des possibilités de connexion étendues, par exemple :
faciliter la mise en oeuvre de plusieurs modules de désembroillage et d'accés conditionnel dits "DVB Common Interface" dans un récepteur,de maniére générale, utiliser plus d'ppareils exteriéurs.

A cet effet, un circuit intégér comprend une matrice de commutation commandée par un microprocesseur et destinée à envoyer ou recevoir différents flux de données de type MPEG verso u depuis différents organs récepteurs ou émetteurs, la matrice comportant à la fois des connexions de type paralléle et des connexions de type série. Des entrées ou sorties multiples de type série sont constituées advantageusement à parir d'une connexion de type paralléle, le circuit étant muni de moytens pour commander l'application de signaux de type série sur des conducteurs prévus pour les signaux de type paralléle. Par exemple, une connextion de type paralléle nécessitant onze conducteurs et une connexion de type série nécessitant auatre conducteurs, douze conducteurs peuvent consituer, soit une connexion de type paralléle comprenant onze des douze conducteurs, soit trios connexions de type série à quatre conduceurs chacune.
Un appareil récepteur décodeur de télévision, ou ine interface entre une liaison de péritélévision et un appareil recepteur décodeur de télévision, comporte avantageusement un circuit intégré selon l'invention.

Ces aspects de l'invention ainsi que d'autres aspects plus détaillés apparaîtront plus clairement grâce à la description suivante d'un mode de réalisation constituant un exemple non limitatif.
La figure 1 représente schématiquement un appareil récepteur décodeur de télévision connu, à propos duquel différentes possibilités de connexion sont indiquées.
La figure 2 est un schéma d'un circuit de désembrouillage, d'accès conditionnel et démultiplexage de la figure 1, dans une version qui offre des possibilités additionnelles.
La figure 3 est un schéma plus détaillé d'une matrice de commutation.
La figure 4 est un schéma détaillé d'un mode de réalisation d'un conducteur mixte série/parallèle.
La figure 5 illustre une application particulière de l'invention.

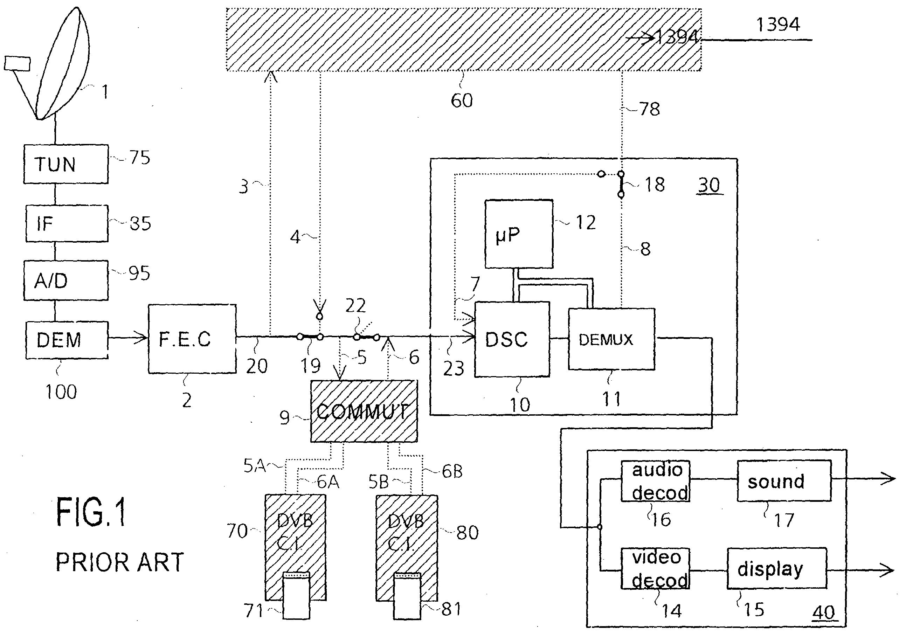

Un appareil récepteur décodeur de télévision connu est illustré à titre d'exemple par la figure 1. Il comprend ici une antenne parabolique 1 comprenant un bloc de changement de fréquence, suivi d'un syntoniseur 75, d'un amplificateur à fréquence intermédiaire 85. Le signal issu de l'amplificateur à fréquence intermédiaire est converti en valeurs numériques dans un convertisseur analogique numérique 95, puis il est démodulé par un démodulateur 100. Enfin, certaines erreurs sont corrigées dans un correcteur d'erreurs 2 ("Forward Error Correction").

La description ci-dessus décrit un exemple non limitatif : l'entrée de l'appareil pourrait aussi bien, par exemple, être reliée à un système de distribution par câble, auquel cas les modules 75 à 100 seraient différents.

A la sortie du correcteur d'erreurs 2, le signal démodulé est appelé MPEG-2 TS (pour "MPEG-2 Transport Stream") : c'est un signal comportant plusieurs programmes avec du son et des données, portés par un même signal, et qui, le cas échéant, est embrouillé.

Dans le cas le plus simple, ce signal MPEG-2 TS est fourni directement, via une connexion de type parallèle 20, à un circuit intégré 30 de désembrouillage, d'accès conditionnel et démultiplexage. Le signal y est désembrouillé dans un circuit de désembrouillage 10, relié par un bus à un microprocesseur 12, et suivi d'un démultiplexeur 11, également relié au bus. Le démultiplexeur sélectionne un programme du signal MPEG-2 TS. Ce programme est appliqué, sous forme numérique, d'une part à un décodeur vidéo 14, et d'autre part à un décodeur de son 16, ces décodeurs délivrant des signaux analogiques pour respectivement afficher une image sur un écran et appliquer le son à un haut-parleur. Ces décodeurs sont suivis de circuits de son 17 et de vidéo 15 reliés à un téléviseur extérieur, l'appareil décrit ici étant un boîtier destiné à être relié à une entrée de péritélévision d'un téléviseur classique. Bien entendu, tous ces circuits peuvent aussi être incorporés dans un téléviseur.

Des éléments dessinés avec des hachures permettent des possibilités supplémentaires, décrites ci-après.

Certains prestataires de services utilisent un procédé d'embrouillage et d'accès conditionnel qui ne peut pas être traité par le circuit de désembrouillage 10, ou bien ils ne désirent pas divulguer leur procédé d'embrouillage ou d'accès conditionnel, et à cet effet ils fournissent un module de désembrouillage et d'accès conditionnel dédié, par exemple sous la forme d'une carte au format dit "PCMCIA", qui contient des moyens propres au procédé mais dont le signal en sortie répond à une norme. Pour utiliser ce module, une interface 70 est utilisée ; cette interface appelée "DVB Common Interface" est munie d'un lecteur pour une carte PCMCIA 71. Le signal sur la connexion 20 est amené à l'entrée de l'interface 70 par une connexion 5, aujourd'hui de type parallèle, via un commutateur 9 dont le rôle sera explicité plus loin. Le signal désembrouillé par la carte 71 est renvoyé via le commutateur 9 sur une connexion 6, de type parallèle, reliée à une entrée 23 du circuit 30. Il est clair que, lorsque la carte 71 est active, la connexion 20 doit être coupée entre les connexions 5 et 6, par exemple au moyen de l'interrupteur 22, et que le circuit de désembrouillage 10 n'applique aucun processus de désembrouillage aux signaux déjà désembrouillés.

Si l'on désirait faire usage de plusieurs cartes PCMCIA fournies par des prestataires de service différents, il faudrait insérer la carte adéquate au moment de visionner une émission, selon le prestataire de service. Pour éviter cette manipulation, une norme prévoit la possibilité de placer plusieurs interfaces en série. Une deuxième interface 80, munie d'un lecteur pour une deuxième carte PCMCIA 81, peut être installée et mise en service à la demande par le commutateur 9, de type télécommandable, permettant de sélectionner soit l'interface 70, soit l'interface 80.

Une autre possibilité supplémentaire est d'utiliser une interface de liaison 60 vers un appareil extérieur de péritélévision. Cette interface de liaison est reliée, par exemple, par une connexion de type série dite "1394" à un appareil extérieur connu, non représenté, qui peut être entre autres un magnétoscope numérique ou un enregistreur lecteur de disque dit "DVD" ou encore un disque dur.

Une manière de relier l'interface de liaison 60 à l'appareil récepteur décodeur est d'employer une connexion d'entrée 3, de type parallèle, et une connexion de sortie 4, de type parallèle, connectées à la connexion 20. C'est donc un flux de type MPEG-2 TS qui est reçu ou délivré via l'interface de liaison 60. Lorsqu'un signal est fourni sur la connexion 4, la connexion 20 doit être coupée, par exemple au moyen d'un commutateur 19. Un inconvénient de cette solution est qu'il n'est pas possible d'envoyer vers l'extérieur un flux partiel ou un flux désembrouillé.

Une deuxième manière de relier l'interface de liaison 60, qui est aujourd'hui la plus courante, est d'employer une connexion bi-directionnelle 78, de type parallèle, reliée via un commutateur 18, soit directement à une sortie du démultiplexeur 11 par une connexion 8, soit à l'entrée du circuit 10 par une connexion 7. Le circuit 10 est muni de deux entrées 7 et 23 de type parallèle. Cette deuxième manière présente l'avantage de permettre l'envoi vers l'extérieur de tout ou partie du flux MPEG2-TS, au besoin désembrouillé, mais ne peut fonctionner que dans une seule direction à la fois. Une solution complète serait la combinaison des deux solutions et, pour cela, il faut prévoir une matrice d'éléments de commutation relativement complexe.

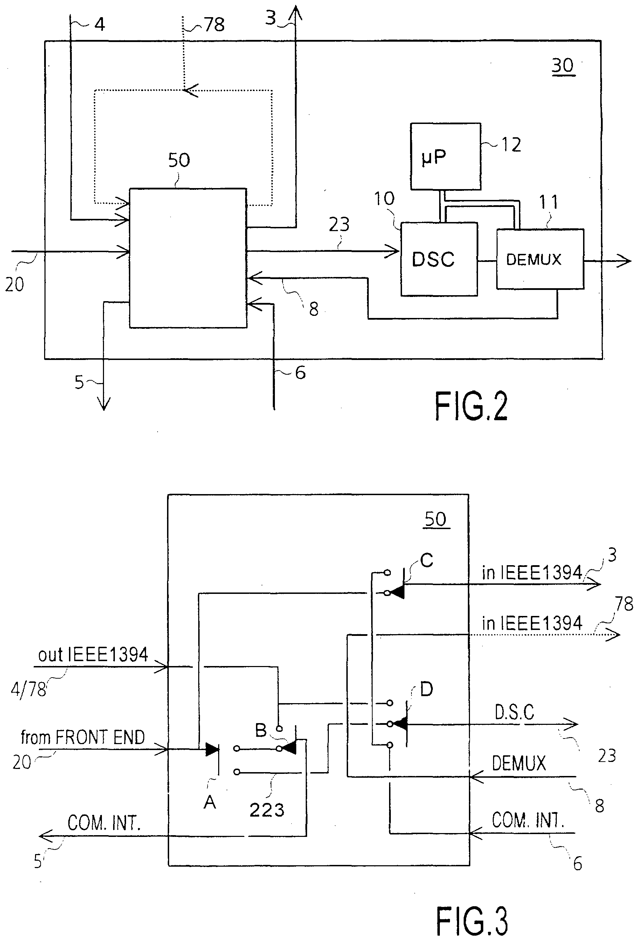

Un circuit de désembrouillage, d'accès conditionnel et démultiplexage 30 dans lequel une telle matrice 50 est incorporée est représenté à la figure 2. La matrice 50 possède des entrées pour les connexions 6, 20, 4 et 78, ainsi que des sorties pour les connexions 23, 5, 78 et 3.

Un exemple d'une réalisation d'une matrice de commutation 50 comportant des commutateurs A, B, C, D, est représenté à la figure 3.

Dans le cas le plus simple où une émission doit être reçue depuis la parabole 1 et traitée par le désembrouilleur 10, la connexion 20 peut être reliée à la connexion 23 via les commutateurs A et D en cascade et la connexion 223.

Dans le cas où il est fait appel à une carte PCMCIA, la connexion 20 peut être reliée à la connexion 5 via les commutateurs A et B en cascade, et la connexion 6 peut être reliée à la connexion 23 via le commutateur D.

Dans le cas de la première manière décrite ci-dessus pour relier l'interface de liaison 60, la connexion 3 peut être connectée, via le commutateur C, à la connexion 20, et la connexion 4 peut être reliée à la connexion 23 par le commutateur D, le désembrouilleur 10 étant actif.

Lorsque, dans le dernier cas ci-dessus, un module de désembrouillage et d'accès conditionnel dédié est utilisé, l'entrée 4 peut être reliée à la connexion 5 via le commutateur B, le commutateur D reliant alors la connexion 23 à la connexion 6.

Dans le cas de la seconde manière de relier l'interface de liaison 60 par la connexion bidirectionnelle de type série 78, celle ci est amenée à la fois à l'entrée notée 4/78 et à la sortie 78 ; la connexion 4/78 peut être reliée à la connexion 23 via le commutateur D, et la connexion 78 est reliée directement à l'entrée 8 dans la matrice de commutation.

Les connexions de type parallèle habituellement utilisées comprennent onze conducteurs ; les commutateurs sont donc des commutateurs à onze "contacts par position". Le terme "contact par position" est placé entre guillemets parce qu'il ne s'agit ni de contacts ni de positions physiques, mais d'éléments interrupteurs électroniques. Les connexions, qui sont représentées à chaque fois sur la figure par un seul trait, sont en réalité, dans le cas de connexions de type parallèle, à chaque fois un faisceau de onze conducteurs, à savoir huit conducteurs pour huit bits, plus trois conducteurs annexes pour une horloge, un signal de validation et un signal de synchronisation. Dans le cas de connexions de type série, celles habituellement utilisées comprennent quatre conducteurs: un conducteur pour un bit de signal de type série, plus trois conducteurs annexes pour une horloge, un signal de validation et un signal de synchronisation. Le nombre de conducteurs périphériques de la matrice 50, notamment ceux qui sortent du circuit de désembrouillage, d'accès conditionnel et démultiplexage 30, est très élevé. Ainsi la matrice de la figure 3 comprend ici onze conducteurs pour chacune des connexions 23 et 8, soit 22 conducteurs qui restent à l'intérieur du circuit 30, et onze conducteurs pour chacune des connexions 4/78, 20, 5, 6, 78, 3, soit 66 conducteurs qui entrent ou sortent du circuit 30.

Pour réduire le nombre de conducteurs afin de réaliser le circuit plus facilement sous forme intégrée, en conservant les fonctionnalités exposées plus haut, certaines des connexions de la matrice de commutation peuvent être mixtes, c'est-à-dire que chaque connexion constitue alors soit une seule connexion de type parallèle, soit une connexion multiple de type série c'est-à-dire plusieurs connexions de type série. En d'autres termes, la matrice peut recevoir ou fournir des signaux sur certains conducteurs sous forme parallèle ou, en utilisant les mêmes conducteurs, sous forme série, la configuration désirée étant obtenue par programmation.

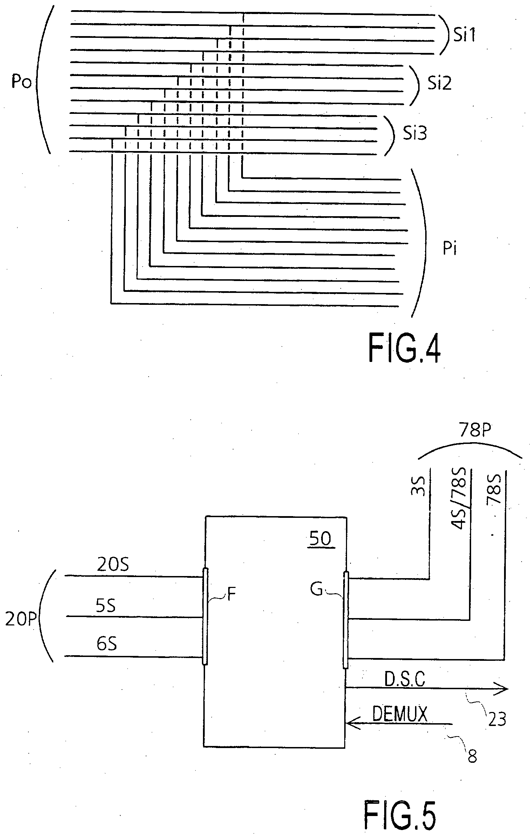

De préférence, une connexion de type parallèle comprend douze conducteurs au lieu de onze, c'est-à-dire qu'un douzième conducteur apparemment inutile est prévu. Ainsi, au prix d'un seul conducteur supplémentaire, ce sont trois connexions de type série au lieu de deux qui peuvent être utilisés, impliquant 3 × 4 = 12 conducteurs. A titre d'exemple, tous les conducteurs relatifs à une connexion sont représentés sur la figure 4. La connexion Po possède douze conducteurs. Onze de ces douze conducteurs sont utilisés pour former une connexion de type parallèle Pi à onze conducteurs, qui était représentée par un seul trait sur la figure 3. Les quatre premiers conducteurs parmi les douze conducteurs de Po constituent quatre conducteurs d'un premier faisceau de type série Si1. Les quatre conducteurs suivants de Po constituent quatre conducteurs d'un deuxième faisceau de type série Si2. Les quatre derniers conducteurs constituent quatre conducteurs d'un troisième faisceau de type série Si3. Des commutateurs comme ceux de la figure 3 permettent de sélectionner une ou plusieurs des connexions Si1, Si2, Si3, Pi.

Dans l'application illustrée à la figure 5, la matrice 50 n'est munie que de deux connexions F et G à douze conducteurs chacune. Sur cette figure, le numéro d'une connexion, par exemple 20P ou 20S, désigne la connexion de même numéro (20) que sur la figure 1, avec un suffixe P ou S signifiant "parallèle" ou "série". La connexion F permet le branchement d'une liaison de type parallèle 20P et la connexion G permet le branchement d'une liaison de type parallèle 78P. La matrice comporte peu de conducteurs mais les possibilités de branchements sont réduites si des connexions de type parallèle sont seulement utilisées. Si, par contre, une configuration de type série est programmable, comme expliqué à propos de la figure 4, alors trois connexions de type série 20S, 5S, 6S peuvent être connectées à la place d'une seule connexion 20P, et de même trois connexions de type série 3S, 4S/78S, 78S peuvent être connectées à la place d'une seule connexion 78P.

Cet exemple n'est bien entendu pas limitatif, et de nombreuses variantes peuvent être facilement imaginées :
- toutes les combinaisons possibles de signaux série ou parallèle peuvent être utilisées avec un nombre de conducteurs choisi en fonction des connexions désirées. Il est par conséquent possible d'optimiser le nombre de conducteurs en fonction des connexions désirées.
- en munissant par exemple la matrice 50 de trois connexions à douze conducteurs, qui permettraient de réaliser neuf connexions de type série, les connexions 5 et 6 pourraient aussi être mixtes, une connexion de type parallèle pour un lecteur de carte PCMCIA actuel pouvant se transformer en plusieurs connexions de type série. Cette possibilité s'appliquerait dans plusieurs cas :
   - si un jour il existait des "DVB Common Interface" à connexions de type série.
   - le module 9 avec ses six connexions de type parallèle, possède 66 conducteurs. On pourrait prévoir plusieurs (ici deux) petits modules convertisseurs série/parallèle, à relier chacun par des connexions de type parallèle à un "DVB Common Interface" de type actuel 71, 81, et à relier par des connexions de type série à la matrice 50.
- en outre, une interface de liaison 60 telle que présentée en figure 1 comprend trois connexions de type parallèle 3, 4, 78, soit 33 conducteurs, sans compter la sortie 1394. Elle pourrait, elle aussi, être équipée d'une matrice du genre décrit en regard des figures 4 et 5, qui permettrait, avec seulement 12 conducteurs, de brancher par exemple, soit une seule connexion de type parallèle 78, soit les trois connexions 3, 4, 78 si elles étaient de type série.

## Revendications

1. Dispositif de décodage et de réception de télévision doté d'un circuit monolithique (30) comprenant, entre autres, des moyens de décryptage, des moyens à accès conditionnel, des moyens de démultiplexage, et un microprocesseur, **caractérisé en ce que** ledit circuit monolithique est destiné à fonctionner avec un dispositif de télévision ou un moniteur de télévision périphérique, ledit circuit monolithique comprenant une matrice de commutation (50) pilotée par le microprocesseur et conçue pour transmettre différents flux de données de type MPEG vers différents éléments de réception ou de transmission, ou pour en recevoir à partir de ces derniers, ladite matrice comportant des connexions de type parallèle (Pi), cas dans lequel une connexion multiple de type série (Sil,Si2,Si3) est constituée sur la base d'une connexion de type parallèle (Pi), le circuit étant doté de moyens destinés à piloter l'application des groupes de signaux de type série sur les mêmes conducteurs conçus pour les signaux de type parallèle.

2. Interface de connexion entre un dispositif de moniteur de télévision périphérique et un dispositif de décodage et de réception de télévision, ladite interface de connexion comportant un circuit monolithique (30) à fonctionner avec un dispositif de télévision ou un moniteur de télévision périphérique, ledit circuit monolithique comprenant une matrice de commutation (50) pilotée par un microprocesseur et conçue pour transmettre différents flux de données de type MPEG vers différents éléments de réception ou de transmission, ou pour en recevoir à partir de ces derniers, ladite matrice comportant des connexions de type parallèle (Pi), cas dans lequel une connexion multiple de type série (Si1, Si2, Si3) est constituée sur la base d'une connexion de type parallèle (Pi), le circuit étant doté de moyens destinés à piloter l'application des groupes de signaux de type série sur les mêmes conducteurs conçus pour les signaux de type parallèle.

## Patentansprüche

1. Fernsehdecodier- und -empfangsvorrichtung, die mit einer monolithischen Schaltung (30) versehen ist, die unter anderem eine Entschlüsselungseinrichtung, eine Einrichtung mit bedingtem Zugang, eine Demultiplex-Einrichtung und einen Mikroprozessor aufweist, **dadurch gekennzeichnet, dass** die genannte monolithische Schaltung für den Betrieb mit einem Fernsehgerät oder einem peripheren Fernsehbildschirm vorgesehen ist, wobei die genannte monolithische Schaltung eine Schaltmatrix (50) aufweist, die von dem Mikroprozessor gesteuert wird und zum Übertragen verschiedener Datenströme des MPEG-Typs zu verschiedenen Empfangs- oder Übertragungselementen oder zum Empfangen solcher von diesen Letzteren ausgeführt ist, wobei die genannte Matrix Verbindungen des parallelen Typs (Pi) aufweist, wobei in diesem Fall eine mehrfache Verbindung des Reihentyps (Si1, Si2, Si3) auf der Basis einer Verbindung des parallelen Typs (Pi) ausgebildet ist, wobei die Schaltung mit einem Mittel ausgerüstet ist, das zum Steuern des Anlegens von Gruppen von Signalen des Reihentyps an die gleichen wie für Signale des parallelen Typs ausgeführten Leiter vorgesehen ist.

2. Schnittstellenverbindung zwischen einer peripheren Fernsehbildschirmvorrichtung und einer Fernsehdecodier- und -empfangsvorrichtung, wobei die genannte Schnittstellenverbindung eine monolithische Schaltung (30) für den Betrieb mit einem Fernsehgerät oder einem peripheren Fernsehbildschirm aufweist, wobei die genannte monolithische Schaltung eine Schaltmatrix (50) aufweist, die von einem Mikroprozessor gesteuert wird und zum Übertragen verschiedener Datenströme des MPEG-Typs zu verschiedenen Empfangs- oder Übertragungselementen oder zum Empfangen solcher von diesen Letzteren ausgeführt ist, wobei die genannte Matrix Verbindungen des parallelen Typs (Pi) aufweist, wobei in diesem Fall eine mehrfache Verbindung des Reihentyps (Si1, Si2, Si3) auf der Basis einer Verbindung des parallelen Typs (Pi) ausgebildet ist, wobei die Schaltung mit einem Mittel ausgerüstet ist, das zum Steuern des Anlegens von Gruppen von Signalen des Reihentyps an die gleichen wie für Signale des parallelen Typs ausgeführten Leiter vorgesehen ist.

## Claims

1. Television decoding and receiving device equipped with a monolithic circuit (30) comprising, inter alia, decrypting means, means having conditional access, demultiplexing means, and a microprocessor, **characterised in that** said monolithic circuit is intended to operate with a television device or a peripheral television monitor, said monolithic circuit comprising a switching matrix (50) controlled by the microprocessor and designed to transmit different data flows of the MPEG type to different receiving or transmitting elements, or to receive such from these latter, said matrix comprising connections of the parallel type (Pi), in which case a multiple connection of the series type (Si1, Si2, Si3) is formed on the basis of a connection of the parallel type (Pi), the circuit being equipped with means intended to control the application of groups of signals of the serial type to the same conductors as designed for signals of the parallel type.

2. Interface connection between a peripheral television monitor device and a television decoding and receiving device, said interface connection comprising a monolithic circuit (30) to operate with a television device or a peripheral television monitor, said monolithic circuit comprising a switching matrix (50) controlled by a microprocessor and designed to transmit different data flows of the MPEG type to different receiving or transmitting elements, or to receive such from these latter, said matrix comprising connections of the parallel type (Pi), in which case a multiple connection of the series type (Si1, Si2, Si3) is formed on the basis of a connection of the parallel type (Pi), the circuit being equipped with means intended to control the application of groups of signals of the serial type to the same conductors as designed for signals of the parallel type.
